# EUROPEAN PATENT APPLICATION

(11) **EP 4 553 668 A1**
(43) Date of publication of application: **14.05.2025**
(21) Application number: 23306940.0
(22) Date of filing: 09.11.2023
(51) Int. Cl.: G06F 15/82

(54) **METHOD AND SYSTEM FOR PREFETCHING DATA IN A HIGH-PERFORMANCE COMPUTING SYSTEM**

(71) Applicant: BULL SAS, 78340 Les Clayes-Sous-Bois (FR); Ensta Bretagne, 29806 Brest Cedex 9 (FR)
(72) Inventor: NICOLAS, LOUIS MARIE, 38000 Grenoble (FR); COUVEE, PHILIPPE, 38190 Villard Bonnot (FR); MIMOUNI, SALIM, 38100 Grenoble (FR); BOUKHOBZA, JALIL, 29200 Brest (FR)
(74) Representative: Cabinet Camus Lebkiri

(57) **Abstract**

According to an aspect of the invention, it is provided a computer implemented method for prefetching data related to an application executed by a node of a High-Performance Computing system while said node is running an application, the prefetching being carried out based on a call-stack and corresponding Input/Output request predicted by using a graph.

## Description

### TECHNICAL FIELD

The technical field of the invention is the one of the energy consumption reductions in a High-Performance Computing system.

The present invention concerns a method and a system for prefetching data in a High-Performance Computing system.

### BACKGROUND OF THE INVENTION

In a High-Performance Computing (HPC) system, the computing resources, such as the Central Processing Unit (CPU) and/or the Graphics Processing Unit (GPU), still consume a non-negligible amount of power when they are idle, especially during loading phases. By "idle" is herein meant that the computing resource is not performing a computing task, which happens when said resource waits for intermediate tasks, such as a loading, to be performed by another resource of the system. By "loading" is meant the mechanism of packing up and moving data from a location away from the computing resource to a location closer to it. As loading phases occur many times during the execution of an application, sometimes at least 10000 times or even at least 100000 times, the computing resource spends a lot of time waiting for these phases to end, while still consuming power.

An approach already known from the art consists in prefetching data close to the computing resource before the triggering of the loading phase. By "prefetching" is meant the pre-loading of the data closer to the resource, i.e., loading before said data is needed.

To this end, it is already known to analyse loading location patterns in order to identify a region in the memory, or in a file, where the loading is required by the computing resource. This can be achieved by using, for example, the Fast I/O^{®} library. The prefetching is then carried out to pre-load the needed data in the identified region of the memory or file. The main drawback of this method is that the loading is globally performed over the region. This means that this mechanism loads data over the whole region without concerns on whether this whole data is going to be used by the computing resource or not. No granularity of the needed data itself is determined. Therefore, a substantial part of the data is unnecessarily loaded.

Another method relies on directly reading the source code of the application in order to detect what data is going to be needed, where it must be loaded and when. However, this method requires to interpret the source code, which is not always available, and to reserve a significant part of the computing resource(s) in order to be carried out.

Yet another method tends to analyse the call-stack that is implemented to perform the loading of the data, for example using the tool from M. Dorier et al., Omnisc'IO: A Grammar-Based Approach to Spatial and Temporal I/O Patterns Prediction, in SC 14: Proceedings of the International Conference for High Performance Computing, Networking, Storage and Analysis. IEEE, Nov. 2014, pp. 623-634. However, this method is based on building a grammatical loss-less model of the analysed call-stacks. The size of the model is therefore dependent on the call-stack sequence, which can lead to large sized models. Moreover, this tool relies on the assumption that each HPC application is implemented as embedded computation loops, which is not true for many HPC applications.

Consequently, there exists a need for a prefetching mechanism that is frugal regarding power and resource consumptions, regardless of the implemented application.

### SUMMARY OF THE INVENTION

An object of the invention is to provide a method for prefetching data close to or on a node of a High-Performance Computing system based on a graph representation of the call-stacks needed to perform the prefetching during the execution of a High-Performance Computing application.

To this end, according to a first aspect of the invention, it is provided a computer implemented method for prefetching data related to an application executed by a node of a High-Performance Computing system, the method comprising:
- Predicting a call-stack based on a graph, said graph comprising one or more vertices, each vertex of the one or more vertices being associated with one call-stack corresponding to one Input/Output request previously required by the application, the one or more vertices comprising at least a first vertex associated with a first call-stack corresponding to the lastly required Input/Output request, the call-stack prediction being carried out based on the first call-stack associated with the first vertex;
- Predicting an Input/Output request to be required by the application, corresponding to the predicted call-stack, the Input/Output request at least defining the data to be prefetched;
- Prefetching the data defined by the predicted Input/Output request.

By "application" is meant a computer program designed to carry out a specific task that is not related to the operation of the computer itself. The application is herein considered to be a High-Performance Computing application, such as an application for weather forecast, for example.

By "close" is meant that the support on which the data is to be prefetched is chosen to minimise the access, reading, writing, and/or deleting latencies to this support by the computing resource, i.e., the Central Processing Unit (CPU) and/or the Graphics Processing Unit (GPU). These latencies can, for example, be minimised by reducing the spatial distance between the support and the computing resource, by using a support architecture dedicated to fast data management, for example access, reading, writing and/or deleting by the computing resource, for example using a Solid-state drive (SSD) instead of a Hard disk drive (HDD) architecture, and/or by using a support that is connected to the computing resource via a connection with a faster transfer rate than other supports, etc. The support is configured to receive and store the data either directly in its memory (be it of volatile or non-volatile type) or in a file inside said memory.

By "call-stack" is meant a stack data container that contains information regarding the active subroutines, defined by an Input/Output request, of a computer program. Put another way, the call-stack comprises contiguous sequences of frames, also called stack frames, comprising at least one frame and wherein each frame comprises the information related to one call to one function to be implemented to carry out the Input/Output request. Each frame thus contains the arguments given to the function, the function's local variables, and the address at which the function is to be executed. Each call-stack can then be seen as a sequence of function calls, i.e., computer instructions, which when implemented by the computing resource, or another resource, lead said resource to carry out the Input/Output request required by the computing resource. The sequence of function calls comprises at least one function/instruction. In other words, a call stack is a per process memory buffer in which is stored the return address each time a function is called on a Last In First Out basis. When the execution of the function ends, the return address at the top of the call stack is used (and then removed) to execute the next instructions.

By "graph" is meant a structure corresponding to a set of objects wherein some couples of objects are in some sense related. For instance, the objects, represented as vertices in the graph, herein are the call-stacks, and the relation between a pair of objects, represented as an edge between the pair of vertices, corresponds to a probability of a call-stack to be implemented given the other call-stack of the pair.

By "Input/Output request" is meant a request emitted by the computing resource during the execution of the application to manage the data, for example to access, read, write, and/or delete data on the support. The Input/Output request therefore corresponds to one call-stack and vice versa, i.e., the Input/Output request corresponds to one sequence of functions, and vice versa. The Input/Output request then at least defines the data needed by the computing resource during the Input/Output phase, the location where the data should be stored during said phase, i.e., the location on the support and/or in the file. The location can be a specific address on the support or an offset from a predefined origin, from example an offset from the beginning of the file in which the data is to be prefetched. Thanks to the invention, it is possible to predict a next call-stack, corresponding to an Input/Output request predicted to be required by the application, and thus to prefetch the data corresponding to this request. This prediction is advantageously performed by a frugal graph which only contains one vertex per different call-stack that has been implemented to respond to the Input/Output requests required by the application. The graph, indeed, takes advantage of the recurring nature of the Input/Output requests required by the application.

Moreover, the graph is able to predict the next call-stack regardless of the implemented application as it only contains a vertex per call-stack without any assumption concerning the way the application is implemented.

Apart from the characteristics mentioned above in the previous paragraph, the method according to a first aspect of the invention may have one or several complementary characteristics among the following characteristics considered individually or in any technically possible combinations.

In some embodiments, the graph is initiated with a vertex associated with the call-stack corresponding to an initial Input/Output request, said initial Input/Output request being required by the application when initialising said application.

The graph is thus initiated by adding a vertex associated with the call-stack corresponding to the first Input/Output request required by the application.

In some embodiments, the call-stack prediction is carried out when an Input/Output request is currently required by the application, the first vertex associated with the first call-stack corresponding to the lastly Input/Output request required before the currently required Input/Output request.

The prediction is performed when a new Input/Output request is required by the application. The predictions and prefetching steps can also be implemented each time a new Input/Output request is required by the application.

In some embodiments, the method comprises before the call-stack prediction:
- Detecting that the Input/Output request is currently required by the application;
- Retrieving a current call-stack corresponding to the Input/Output request currently required and:
   - When the current call-stack is not similar to a previous call-stack corresponding to a previous Input/Output request required by the application:
      ∘ Adding a second vertex in the graph associated with said current call-stack; and
      ∘ Adding a directed edge in the graph from the first vertex to the second vertex;
   - When the current call-stack is similar to a previous call-stack corresponding to a previous Input/Output request required by the application but no edge in the graph connects the first vertex to the vertex corresponding to the current call-stack:
      ∘ Adding a directed edge in the graph from the first vertex to the second vertex;
the current call-stack becoming the first call-stack for predicting the call-stack. The graph can then be dynamically generated over the execution of the application, thus enhancing its prediction ability.

In some embodiments, the correspondence between a call-stack and an Input/Output request is comprised within a hash table.

The hash table enables to almost instantly provide the call-stack related to the Input/Output request, and vice versa, each time a call-stack has to be retrieved based on an Input/Output request or an Input/Output request is to be determined from a corresponding predicted call-stack. The hash table allows to avoid the burden of iterating over all the known call-stacks and related Input/Output requests when an already known Input/Output request is required.

In some embodiments, the hash table is updated when the current call-stack is not similar to a previous call-stack associated with one of the one or more vertices. The hash table can thus be kept up to date by adding an unreferenced Input/Output request newly required and its corresponding call-stack to said hash table.

In some embodiments, each vertex in the graph comprises an identifier of the call-stack with which it is associated, the identifier being comprised within the hash table.

Each vertex then comprises a unique identifier of the call-stack it is associated with, instead of the complete call-stack. For instance, the vertex does not need to comprise the whole sequence of functions but only the unique identifier, therefore reducing the size of the graph. The size of the model is thus significantly reduced, compared to techniques known from the art, especially when dealing with large call-stacks and/or a large number of Input/Output requests. The identifier can be determined using known techniques from the art, such as the Murmur^{®} tool.

In some embodiments, the identifier of a call-stack is determined based on a number M of frames of the call-stack, M being an integer comprised between 1 and 124.

The identifier is then constructed based on a part of the frames of the call-stack without needing to analyse the whole sequence of frames of the call-stack to identify said call-stack.

In some embodiments, the predicted call-stack is:
- The first call-stack when no edge connects the first vertex to another of the one or more vertices in the graph; or
- When at least one edge connects the first vertex to another vertex of the one or more vertices in the graph, chosen among the first call-stack or a call-stack associated with a vertex of the one or more vertices to which the first vertex is connected, said choice being carried out based on a metric value assigned to the at least one edge.

In some embodiments, the metric is a most recently used path, a most frequently used path, or any combination thereof.

By "most frequently used" path is meant the path, i.e., the edge, which corresponds to the higher rate of occurrence based on previously required Input/Output requests corresponding to the associated vertex/call-stacks connected by said edge.

By "most recently used" path is meant the path, i.e., the edge, which corresponds to the last occurrence based on previously required Input/Output requests corresponding to the associated vertex/call-stacks connected by said edge.

The prediction can thus either or both benefit from a global statistical metric, i.e., the most frequently used rate, and from a local metric, i.e., the most recently used rate.

In some embodiments, the method comprises:
- Detecting that the call-stack prediction is erroneous when the next Input/Output request required by the application is not similar to the predicted Input/Output request;
- Correcting the graph based on said error detection, wherein the correction comprises:
   - Adding the second vertex and/or the edge, according to claim 4, and/or
   - Modifying the metric value assigned to the edge connecting the first vertex to a vertex associated with the predicted call-stack, and/or the value assigned to the edge connecting the first vertex to the second vertex.

By "similar" is meant that at least a part of the frames of the sequences of frames of two call-stacks are identical. The part of the frames corresponds to a number L of the first frames of the sequence of frames of each call-stack. L is an integer and is comprised between 1 and 100.

The graph can then be corrected to compensate for the prediction error and to enhance the prediction ability of said graph.

In some embodiments, each vertex of the one or more vertices is associated with a sequence of call-stacks, each call-stack of the sequence of call-stacks corresponding to one Input/Output request of a sequence of Input/Output requests required by the application, the sequence of Input/Output requests comprising a number N of the previous Input/Output requests when the vertex has been added to the graph, N being an integer and being comprised between 1 and 100.

The more the sequence comprises call-stacks associated to each vertex, the more the graph prediction is accurate. However, the size of the graph upscales with the size of its vertices. A trade-off between 1 and 100 call-stacks per sequence provides a graph with a high prediction accuracy with a reasonable graph size, for example inferior to 100 Mb, even inferior to 10 Mb.

Moreover, multiple prefetches can be carried out in order to anticipate over several future Input/Output requests. This embodiment is especially relevant when the prefetched data is of small size, typically below 100Mb, or even below 100 kb.

According to a second aspect of the invention, it is provided a system for prefetching data close to or on a node of a High-Performance Computing system, said system being configured for implementing the method according to the first aspect.

According to a third aspect of the invention, it is provided a Highh-Performance Computing system comprising a system for prefetching data close to or on a node of the High-Performance Computing system, according to the second aspect.

According to a fourth aspect of the invention, it is provided a computer program product comprising instructions which, when the program is executed by a computer, causes the computer to carry out the method according to the first aspect.

According to a fifth aspect of the invention, it is provided a computer-readable medium comprising instructions which, when executed by a computer, cause the computer to carry out the method according to first aspect.

The invention and its various applications will be better understood by reading the following description and examining the accompanying figures.

### BRIEF DESCRIPTION OF THE FIGURES

The figures are presented for information purposes only and in no way limit the invention.
- Figure 1 is a flow chart of a method for prefetching data according to an embodiment.
- Figure 2 is a schematic representation of a graph according to an embodiment.
- Figure 3 is a schematic representation of the determination of an identifier of a call-stack according to one embodiment.
- Figure 4 schematically represents a system for prefetching data, comprised in a High-Performance Computing system, according to an embodiment.

### DETAILED DESCRIPTION OF THE PREFERRED EMBODIMENT

Some embodiments of devices and methods in accordance with embodiments of the present invention are now described, by way of example only, and with reference to the accompanying drawings. The description is to be regarded as illustrative in nature and not as restrictive.

The invention hereinafter described refers to a method for prefetching data. The method enables the prediction of the data to be required by a running High-Performance Computing (HPC) application during a next Input/Output phase. This prediction relies on a graph that can be dynamically built along the execution of said application. The graph is built in order to represent the Input/Output phases behaviour of the application, and therefore represents the way the application itself behaves. The graph is also built in order to avoid redundancy and provides a frugal predictor.

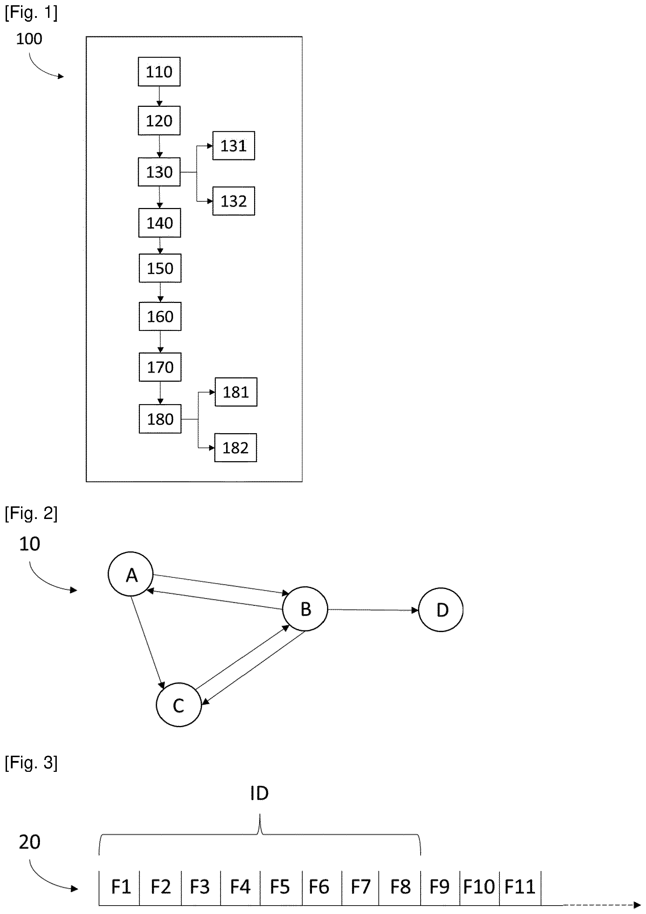

As illustrated on figure 1, a first aspect of the invention then relates to a method 100 for prefetching data related to an application executed by a node of a High-Performance Computing (HPC) system.

In the following, in order to avoid ambiguity, the term "node" refers to an element of the HPC system configured to run the HPC application, while the term "vertex" refers to an element of the graph. As such, a node comprises, at least, a computing resource, such as a CPU and/or a GPU and a memory, such as a volatile or non-volatile memory. A vertex comprises a call-stack or an identifier of the call-stack.

The graph is a directed graph. In its initial form, the graph comprises one vertex, and in its final form, the graph comprises several vertices. The graph 10 then comprises, as represented in figure 2, one or more vertices A, B, C and D, wherein each vertex is associated with one call-stack. The call-stack corresponds to one Input/Output request that has previously been executed by the running application. Put another way, the call-stacks corresponds to the Input/Output request that has previously been emitted by the computing resource that runs the application based on the implementation of its source code. The graph 10 can also comprise one or more edges, indicated by the arrows between the vertices in figure 2. Each edge is one-sided, i.e., is a directed edge, which means that an edge leads from a vertex to another. Another edge would be used to lead the way back. Each edge indicates that, over the course of the currently running application, at least one event has led from the vertex at the end of the edge to the vertex at the tip edge. As each call-stack corresponds to an Input/Output request, it can be considered that each edge indicates that one Input/Output request has been required after another one at least once. As such, the graph 10 represents the causality in the chain of required Input/Output requests by the application. This is why the graph 10 represents the way the application behaves.

For simplification purpose, in the following, an Input/Output request will be denoted "I/O request", or simply "request".

The graph 10 comprises at least a first vertex which is associated with a first call-stack. This first call-stack corresponds to the I/O request that has lastly been required. When the graph only comprises one vertex, which happens when the application is initialised, the first vertex is this one vertex, also called the initial vertex. Said another way, the initial vertex is the first vertex built into the graph from the first I/O request, called the initial request, required by the application, when said application is initialised, i.e., after the execution of said application has just started.

In some embodiments, each vertex comprises an identifier of the call-stack that is associated with said vertex. The identifier is a unique identifier and can be determined via any method known from the art. For example, the identifier can be determined based on a number M of frames of the considered call-stack. M is an integer number, for example comprised between 1 and 124. For example, as represented in figure 3, M = 8 and the identifier ID is determined based on the 8 first frames F1 to F8 of the call-stack 20. It is considered that using only the M first frames for determining the identifier is a reasonable approximation with an acceptable loss of information. Other frames, apart from the M firsts, can be used to determine said identifier.

The correspondence between a call-stack and an I/O request can be determined by any technique already know from the art. For example, in some embodiments, this correspondence is defined in a hash table which comprises one or more couples, each couple referring to an I/O request and its corresponding call-stack. The hash table can be constructed using known techniques from the art so as to be predetermined before implementing the method 100. Alternatively, the hash table can be dynamically constructed or updated from an already existing hash table, during the execution of the application. The hash table can be dedicated to detail the correspondence between call-stacks and I/O requests of the application or for several applications. The hash table can be shared between nodes running the same application, meaning that the hash table can also be dynamically constructed or updated based on the execution of several instances of the application, each instance being implemented on one node of the HPC.

The hash table is then used to obtain the I/O request corresponding to a given call-stack and/or, reciprocally, used to obtain the call-stack corresponding to a given I/O request.

In some embodiments, the call-stack identifiers are contained, for each call-stack used for the application, in the hash table.

The hash table can, for example, be constructed using the tool Murmur^{®} 2.

The method 100 comprises a step 140 of predicting a call-stack. The prediction is performed by using the graph, which can either be already built, in construction or currently being updated. The prediction is achieved by determining what is going to be the next call-stack depending on the previous call-stack that was used to implement the last I/O request required. The prediction then relies on the last I/O phase that was actually carried out on demand of the application. In other words, the prediction does not rely on a past prediction but on the I/O phase that was lastly implemented, i.e., corresponding to the last I/O request that was required by the application. Put differently, the call-stack prediction is carried out based on the first call-stack associated with the first vertex.

As a call-stack comprises a sequence of frames that relates to the data to be prefetched, for example when and/or where to carry out the prefetch, the predicted call-stack relates to the data to be prefetched.

The prediction can be performed directly by determining which edge, if any, describes best the path to the next vertex, starting from the first vertex. For example, when the first vertex is the vertex A indicated in figure 2, two paths start from B to the vertices A and C, respectively.

As such, when the graph comprises at least one edge that connects the first vertex to another vertex, the next call-stack, i.e., the predicted call-stack, can be one of:
- The first call-stack: indeed, two or more similar I/O requests can be sequentially required by the application;
- The call-stack associated with any of the vertices that are linked to the first vertex by an edge that leads from the first vertex to the other vertex.

The choice of the edge can depend on one or more metrics that are assigned to each edge. This means that each edge holds a value of the metrics. Said value can indicate a propensity of this path to be chosen over the others.

The metrics can be heuristics determined from past implemented I/O phases, for example based on statistics concerning these I/O phases. For example, the prediction can be based on a :
- Most Recently Used (MRU) path, which is the path, i.e., the most recent edge that has been actually used when starting from the first vertex. In other words, the MRU path corresponds to the path between the first vertex and the vertex associated with the call-stack corresponding to the I/O request that was required the last time in the past course of execution of the application when the I/O phases have crossed the path of the first vertex ; or
- Most Frequently Used (MFU) path, which is the path, i.e., the edge that has been used the most, starting from the first vertex, within the past course of execution of the application. In other words, the MFU path corresponds to the path between the first vertex and the vertex associated with the call-stack corresponding to the I/O request that was the most frequently required after the I/O request corresponding to the first vertex has been required; or
- Any combination of MRU and MFU, such as a weighted or non-weighted combination.

Other metrics can be alternatively or additionally used, for example metrics based on machine learning mechanisms.

Alternatively, when there is no edge leading outward the first vertex, the predicted call-stack is the first call-stack itself, as the graph knows no other solution than to repeat said first call-stack yet.

The hash table can also be used to predict when the predicted I/O request will be required by the application. The hash table then comprises, for example, estimates of a duration before the predicted I/O request is required starting from the time the prediction is carried out. Such hash table can also be constructed using known tools such as Murmur^{®}2. Therefore, the I/O request prediction also comprises the prediction of the moment when the I/O request is going to be required.

The call-stack prediction can also be based on a time stamp related to the execution of the application that provides context data regarding said execution of the application. For example, the time stamp may indicate when the application required a checkpoint, an I/O request, a computing phase, etc. Advantageously, the use of the time stamp when predicting the call-stack allows determining a moment suitable for prefetching the data in order, for example, to implement the prefetch at a moment when the storing resource is expected to not being used or less used than at other future moments. The time stamp can be in the form of a timer, comprising days, hours, minutes, and/or seconds, or can be a date indicated in days, hours, minutes, and/or seconds format.

The method 100 then comprises a step 150 of predicting the Input/Output request that corresponds to the predicted call-stack. This I/O request is then the request expected to be required by the application given the last required request.

This determination can be implemented using any technique from the art to relate a call-stack to a corresponding I/O request.

For example, the hash table, which indicates the couple corresponding to said predicted call-stack and said predicted I/O request, can be used. This means that the request can only be predicted among already known or already seen call-stack and request couples. As explained later, an update mechanism can, however, be implemented to modify the hash table, and thus the graph, when a new I/O request is required, i.e., a request that is not already known in the hash table and/or in the graph.

The method also comprises a step 160 of prefetching the data. The data for the prefetching is defined by the I/O request, which also indicates where to prefetch said data, for example on which support and at which location on said support. The prefetch can, therefore, be performed by any existing method in the art, as long as it satisfies the predicted I/O request and the data and location it defines, along with the predicted time stamp. The data can be prefetched on a cache memory of the node or of the computing resource, which, consequently, comprises such a cache memory. The data can then be prefetched at the closest possible location relative to the node/computing resource.

The steps of the method 100 can be implemented whenever it is needed. For example, the steps of the method 100 can be periodically implemented at a predefined period, said period being dependent on the application and can be defined by an operator and/or a developer or can be automatically defined.

In another example, the steps of the method 100 are implemented when the application requires an I/O request, for example every time an I/O request is required. In this case, it is considered that the first call-stack, associated with the first vertex, is the call-stack corresponding to the lastly required I/O request, i.e., it corresponds to the lastly Input/Output request required before the currently required Input/Output request.

In some embodiment, the method 100 comprises a step 110 of detecting that an Input/Output request is currently required by the application. The other steps of the method 100 are then carried out when said request is detected.

The I/O request currently required can be detected by any method that enables said detection. For example, it can be performed by intercepting the request emitted by the computing resource that runs the application.

The interception can be carried out thanks to the implementation of a library comprising replacement functions, i.e., program instructions, which have the same names as the functions usually used to require the I/O request, the latter being also called "native functions", so as to be implemented instead of said native functions. For example, the native function "read" is replaced by replacement function "read", when the application needs to use this read function.

The replacement functions require the same arguments and produce the same output as the native functions, but also comprise supplementary mechanisms, such as the following steps of the method 100. The interception then allows to automatically trigger the implementation of the graph and the prefetching of the data required for the next I/O request.

Put another way, a shared library is preloaded into the memory of the node in order to override any dynamically linked function with no need to modify or have access to the application source code.

The method 100 also comprises a step 120 of retrieving a current call-stack that corresponds to the currently required request. The retrieving is performed using any method known from the art dedicated to associating an I/O request to its corresponding call-stack. For example, the retrieving is carried out using the hash table to determine which is the coupled call-stack with the currently required I/O request.

When the current call-stack is already known, i.e., there is a vertex in the graph that is associated with the current call-stack, then the next call-stack prediction is performed based on the determined current call-stack, i.e., the current call-stack becomes the first call-stack which is associated with the first vertex. Put another way, the first vertex is the vertex associated with the current call-stack.

However, when this is not the case, the method comprises, before implementing the prediction step 140, a step 130 of updating the graph based on said current call-stack. Indeed, if the graph does not comprise a vertex associated with said current call-stack, i.e., the current call-stack is not similar to a previous call-stack corresponding to a previous Input/Output request required by the application, an associated vertex has to be added to the graph. Also, if the current call-stack is associated, in the graph, with a vertex to which no edge links from the vertex associated with the call-stack corresponding to the lastly required I/O request, an edge has to be added to the graph.

Therefore, the step 130 can comprise a step 131 of adding a second vertex into the graph. The second vertex is associated to the current call-stack that was detected. This second vertex can, in the corresponding embodiment, comprise the identifier of said current call-stack. Additionally, an edge is added between the first and the second vertices, from the first vertex to the second vertex. For example, as seen in figure 2, the vertex D is added into the graph and is connected by an edge directing from B to D.

Alternatively, when the vertex associated with the call-stack already exists but not the edge between the considered vertices, the step 130 can comprise a step 132 of adding an edge in the graph from the first vertex to the vertex associated with the current call-stack. For example, the first vertex is A, in figure 2, and the current call-stack corresponds to vertex C, then an edge starting from A to C is added to the graph.

The edge added through step 131 or 132 can be, in some embodiments, assigned with a metric value, for example a value relating to an MRU and/or MFU path.

Afterwards, the prediction step 140 is implemented and the predicted call-stack is based on the second vertex, recently added to the graph. In other words, the second vertex becomes the first vertex for carrying out the prediction, i.e., the first vertex is now the second vertex.

In some embodiments, the predicted call-stack is erroneous compared with the call-stack that is really next called for implementing the corresponding next I/O request. Consequently, the method 100 comprises a step 170 of detecting that the predicted call-stack is erroneous. The predicted call-stack is erroneous when the next Input/Output request required by the application is not similar to the predicted Input/Output request from step 150. The comparison can be carried out using any technique known from the art. For example, the comparison can be achieved by using the hash table, by determining whether the next I/O request actually corresponds to the predicted I/O request comprised in the couple associated with said predicted call-stack. It can also be determined whether the request has already been referenced into the hash stable: when it is otherwise, the really next required I/O request cannot correspond to the predicted call-stack.

The method 100 then comprises a step 180 of correcting the graph based on said detected error.

This step 180 can comprise a sub-step 181 of adding a vertex associated with the call-stack corresponding to the really next required request. The vertex addition can be performed in a similar way as the vertex addition of step 131, including the edge addition between the newly created vertex and the vertex associated with the previous call-stack, associated with the lastly required I/O request, before the really next required I/O request. In other words, the first vertex is associated with the call-stack corresponding to the lastly required I/O request, and the second vertex, which is the one added into the graph, is the vertex associated with the new call-stack, corresponding to the really next required request.

Additionally, or alternatively, the sub-step 181 can comprise the addition of an edge between the first and the second vertex. This edge can be added in the way according to step 132.

Additionally, or alternatively, the step 180 can comprise a sub-step 182 of updating the value of the metric that is assigned to the edge connecting the first vertex, i.e., the vertex associated with the first call-stack, which corresponds to the lastly required I/O request, before the really next required I/O request, to the vertex associated with the predicted call-stack.

Additionally, or alternatively, the sub-step 182 can comprise an update of the value of the metric that is assigned to the edge connecting the first vertex, i.e., the vertex associated with the first call-stack, which corresponds to the lastly required I/O request, before the really next required I/O request, to the vertex associated with the new call-stack.

Although herein described as implemented on the node level, i.e., during the implementation of an instance of the application, the method can be implemented on several nodes, simultaneously and/or successively. The graph can, therefore, be individual for the different instances, which means that a separated graph is used for each of the instances of the application. Otherwise, the graph can be shared, using known techniques from the art, for two or more of these instances. In such cases, the graph can be collectively built from the I/O requests of the several instances. A same graph can be shared among applications of a same type and/or nature.

In some embodiments, each vertex of the graph is also associated with several previous call-stacks with respect to the call-stack which is associated to the vertex. These previous call-stacks are called a sequence of call-stacks and comprises call-stacks or call-stacks identifiers. Each call-stack of the sequence of call-stacks corresponds to one Input/Output request from a sequence of Input/Output requests that have already been required by the application. The sequence of I/O request therefore stands as history of several previous required requests. Therefore, one call-stack can be associated with several different vertices and each of these vertices can be associated with a different sequence of call-stacks. The sequence of call-stacks comprises a number N of call-stacks, which means that the sequence of Input/Output requests also comprises a number N of the previous Input/Output requests. Therefore, at the moment the vertex is added to the graph, the N call-stacks are chosen among the previous call-stacks associated with the previous request already required. N is integer and is for example comprised between 1 and 100.

In some embodiments, a hash map is built concurrently to the building of the graph. The hash map comprises the associations of each vertex with its associated call-stack, and the sequence of call-stacks if applicable. The hash map allows to determine, within a constant time, whether the currently required call-stack corresponds to an already existing vertex in the graph when said currently required call-stack does not relate to an edge of the vertex associated with call-stack corresponding to the lastly required. Therefore, the hash map allows to determine in a constant time if a vertex and/or an edge should be added to the graph.

The hash map can be built using known techniques from the art.

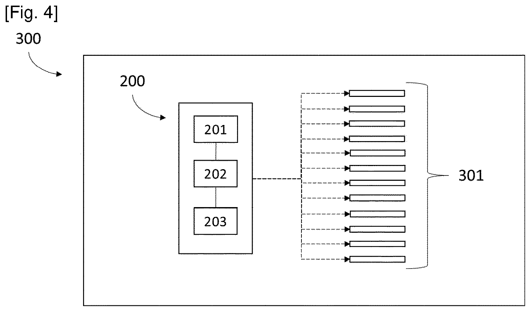

Another aspect of the invention relates to a system configured to implement the method 100. The system comprises, for example, means for carrying out the steps of the method 100. System 200 is, for example, a computer, as illustrated in figure 4. This system 200 comprises a circuit which can comprise, for example, a processor 201, capable of interpreting instructions, in form of a computer program, and a memory 202 that can be of volatile or non-volatile type, capable of storing these instructions. These instructions, when implemented by the processor 201, lead said processor to carry out the method 100.

Alternatively, the circuit can comprise an electronic board on which the steps of the method according to the invention are written in silicon, or a programmable electronic chip such as an FPGA (Field-Programmable Gate Array) chip.

The circuit can also comprise a communication module 203, dedicated to communicating with other devices or systems, such as a HPC system 300 or another system 200.

The system can be implemented in a HPC system 300, which also comprises several nodes 301, each in connection with at least one system 200. The nodes can, partially or completely be in communication with a same system 200. Therefore, depending on the HPC architecture, several systems 200 can be implemented, each connected to one or more nodes 301 of the HPC system 300. In some embodiments, the system 200 is exterior to the HPC system 300. For example, the system 200 can be a remote system, for example implemented on an external server or a cloud system.

Each node 301 of the HPC system includes at least a computing resource, such as a CPU or GPU. Each computing resource can comprise a cache memory, for example a Random Access Memory (RAM), which serves as support for prefetching the data closer to the node, i.e., closer to the computing resource.

## Claims

1. Computer implemented method (100) for prefetching data related to an application executed by a node (301) of a High-Performance Computing system (300), the method comprising:
- Predicting (140) a call-stack (20) based on a graph (10), said graph (10) comprising one or more vertices, each vertex of the one or more vertices being associated with one call-stack (20) corresponding to one Input/Output request previously required by the application, the one or more vertices comprising at least a first vertex associated with a first call-stack (20) corresponding to the lastly required Input/Output request, the call-stack (20) prediction being carried out based on the first call-stack (20) associated with the first vertex;
- Predicting (150) an Input/Output request to be required by the application, corresponding to the predicted call-stack (20), the Input/Output request at least defining the data to be prefetched;
- Prefetching (160) the data defined by the predicted Input/Output request.

2. Method (100) according to the preceding claim, wherein the graph (10) is initiated with a vertex associated with the call-stack (20) corresponding to an initial Input/Output request, said initial Input/Output request being required by the application when initialising said application.

3. Method (100) according to one of the preceding claims, wherein the call-stack (20) prediction is carried out when an Input/Output request is currently required by the application, the first vertex associated with the first call-stack (20) corresponding to the lastly Input/Output request required before the currently required Input/Output request.

4. Method (100) according to the preceding claim, wherein the method (100) comprises before the call-stack (20) prediction (140):
- Detecting (110) that the Input/Output request is currently required by the application;
- Retrieving (120) a current call-stack (20) corresponding to the Input/Output request currently required and:
• When the current call-stack (20) is not similar to a previous call-stack (20) corresponding to a previous Input/Output request required by the application:
∘ Adding (131) a second vertex in the graph (10) associated with said current call-stack (20); and
∘ Adding (132) a directed edge in the graph (10) from the first vertex to the second vertex;
• When the current call-stack (20) is similar to a previous call-stack (20) corresponding to a previous Input/Output request required by the application but no edge in the graph (10) connects the first vertex to the vertex corresponding to the current call-stack (20):
∘ Adding (132) a directed edge in the graph (10) from the first vertex to the second vertex;
the current call-stack (20) becoming the first call-stack (20) for predicting the call-stack (20).

5. Method (100) according to any of the preceding claims, wherein the correspondence between a call-stack (20) and an Input/Output request is comprised within a hash table.

6. Method (100) according to claims 4 and 5, wherein the hash table is updated when the current call-stack (20) is not similar to a previous call-stack (20) associated with one of the one or more vertices.

7. Method (100) according to any of claims 5 or 6, wherein each vertex in the graph (10) comprises an identifier (ID) of the call-stack (20) with which it is associated, the identifier (ID) being comprised within the hash table.

8. Method (100) according to claim 7, wherein the identifier (ID) of a call-stack (20) is determined based on a number M of frames of the call-stack (20), M being an integer comprised between 1 and 124.

9. Method (100) according to any of the preceding claims, wherein the predicted call-stack (20) is:
- The first call-stack (20) when no edge connects the first vertex to another of the one or more vertices in the graph (10); or
- When at least one edge connects the first vertex to another vertex of the one or more vertices in the graph (10), chosen among the first call-stack (20) or a call-stack (20) associated with a vertex of the one or more vertices to which the first vertex is connected, said choice being carried out based on a metric value assigned to the at least one edge.

10. Method (100) according to claim 9, wherein the metric is a most recently used path, a most frequently used path, or any combination thereof.

11. Method (100) according to any of claims 9 and 10, comprising:
- Detecting (170) that the call-stack (20) prediction is erroneous when the next Input/Output request required by the application is not similar to the predicted Input/Output request;
- Correcting (180) the graph (10) based on said error detection, wherein the correction comprises:
• Adding (181) the second vertex and/or the edge, according to claim 4, and/or
• Modifying (182) the metric value assigned to the edge connecting the first vertex to a vertex associated with the predicted call-stack (20), and/or the value assigned to the edge connecting the first vertex to the second vertex.

12. Method (100) according to any of the preceding claims, wherein each vertex of the one or more vertices is associated with a sequence of call-stacks (20), each call-stack (20) of the sequence of call-stacks (20) corresponding to one Input/Output request of a sequence of Input/Output requests required by the application, the sequence of Input/Output requests comprising a number N of the previous Input/Output requests when the vertex has been added to the graph (10), N being an integer and being comprised between 1 and 100.

13. System (200) for prefetching data in a High-Performance Computing system, said system being configured for implementing the method (100) according to any of the preceding claims.

14. High-Performance Computing system (300) comprising a system (200) for prefetching data in the High-Performance Computing system, according to claim 13.

15. Computer program product comprising instructions which, when the program is executed by a computer, causes the computer to carry out the method (100) according to any of claims 1 to 12.
